# EUROPEAN PATENT SPECIFICATION

(11) **EP 0 271 101 B1**
(45) Date of publication and mention of the grant of the patent: **20.03.1996**
(21) Application number: 87118326.5
(22) Date of filing: 10.12.1987
(51) Int. Cl.: G01N 27/30

(54) **Reference electrode**
Referenzelektrode
Electrode de référence

(30) Priority: 11.12.1986 JP 191498/86 U; 04.07.1987 JP 168375/87
(43) Date of publication of application: 15.06.1988
(73) Proprietor: HORIBA, LTD., Minami-ku Kyoto (JP)
(72) Inventor: Tomita, Katsuhiko, Ohtsu-city Shiga-prefecture (JP); Kotani, Haruo, Takatsuki-city Osaka (JP)
(74) Representative: TER MEER - MÜLLER - STEINMEISTER & PARTNER

(56) References cited:
- EP-A- 0 269 031
- EP-A- 0 270 751
- EP-A- 0 271 100
- EP-A- 0 282 651
- DE-A- 3 100 302
- DE-B- 2 605 149
- FR-A- 2 541 462
- PATENT ABSTRACTS OF JAPAN

## Description

### BACKGROUND OF THE INVENTION

### Field of the Invention

The present invention relates to a sheet type reference electrode used as a standard electrode for a measuring electrode for measuring the ion-concentration of a solution.

### Description of the Prior Art

Recently, the present inventors have developed an epoch-making sheet type electrode having various advantages in that it is remarkably small-sized, easily mass-produced, remarkably reduced in costs of production, and remarkably superior in operation and maintenance in comparison with electrodes for the measurement of ion-concentrations (measuring electrodes, reference electrodes and composite electrodes thereof) of the conventional type (test tube type) and additionally various kinds of progressive improvement for it. The sheet type electrode has been disclosed in detail in some patent and utility model applications, such as Japanese Utility Model Application No. Sho. 60-97385.

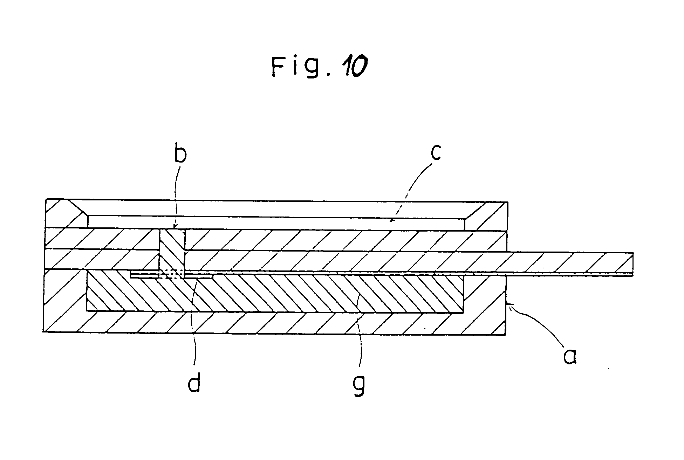

As shown in a rough longitudinal sectional view of Fig. 10, such a sheet type reference electrode (or a reference electrode portion in a sheet type composite electrode for the measurement of ion-concentrations) comprises a gelatinized internal solution g enclosed in a support frame member a, so that a liquid junction surface b of said gelatinized internal solution g may be exposed over a sample solution-dropping portion c, and an internal electrode d coated with an electrode material, such as AgCl, formed to be in contact with said gelatizined internal solution g. In addition, said gelatizined internal solution g is obtained by adding a gelatiziner, such as agaragar, and a water-evaporation inhibitor, such as glycerine, to a fundamental internal solution (for example, a 3.3 M aqueous solution of KCl supersaturated with AgCl with a phosphoric acid buffer solution added). The details thereon have been already disclosed in Japanese Patent Application No. Sho. 61-63564 filed by the present applicant.

EP-A-0 269 031, EP-A-0 270 751 and EP-A-0 271 100 which are comprised in the state of the art in the sense of Art. 54(3) EPC describe a sheet type electrode comprising a junction membrane which is made of an inorganic sintered porous material, an organic high molecular porous material or the like impregnated with KCl, and covering a gelatinized electrolyte solution.

### SUMMARY OF THE INVENTION

However, in the above described sheet type electrode, the liquid junction surface b of the gelatinized internal solution g is arranged to be directly brought into contact with the sample solution, so that it is almost impossible to control the quantity of ions (K⁺, Cl⁻) which leaks (diffuses) from the gelatinized internal solution g. Accordingly, the main problem is that the concentration of the gelatinized internal solution g is apt to be lowered in a comparatively short time but it is impossible to exchange the gelatinized internal solution g, so that the life of the electrode as a whole is limited and an accurate measurement cannot be carried out anymore.

It is an object of the present invention to improve remarkably the life time of an electrode and the accuracy of measurement by remarkably satisfactorily controlling the quantity of ions diffusing from the gelatinized internal solution using a means which can be easily produced in mass-production.

The present invention provides a sheet type reference electrode (R) for a sheet type composite electrode, comprising a gelatinized internal solution (G, 122, 130) formed by adding a gelatinizing agent and a water-evaporation inhibitor to an internal solution enclosed in a support frame member (22, 135), an internal electrode (6B, 116B) coated with an electrode material in contact with said internal solution, and a liquid junction member (E, 125, 134) consisting of a gel-impregnated hydrophilic porous material obtained by impregnating a chemically stabilized hydrophilic high molecular porous material with a gelatinized composition which does not dry out even when it is left in the air, wherein said liquid junction member either a) is provided to be in contact with the internal electrode (116B) on the lower side thereof and exposed on the measuring surface at the upper side thereof or b) connects said gelatinized internal solution (130) with the sample solution.

According to another embodiment, the reference electrode further comprises a hydrophilic porous film X covering said liquid junction member E which connects said gelatinized internal solution G with the sample solution.

In the sheet type reference electrode according to one embodiment of the present invention, the liquid junction member E connected to the gelatinized internal solution G for the sample solution is covered or coated respectively With the hydrophilic porous thin film X so that there is no direct contact with the sample solution and the entire thin film X takes part in the control of the diffusion of ions from the gelatinized internal solution G, whereby the quantity of the diffusing ions can be always maintained constant for a long time regardless of the concentration of the gelatinized internal solution G. In addition, when a water-evaporation inhibitor, such as glycerine, comprised in the gelatinized internal solution G is introduced into the hydrophilic porous thin film X, the surface of the hydrophilic porous thin film X does not dry. Therefore, an ideal liquid junction portion is formed, so that the life time of the electrode and the accuracy of measurement can be remarkably improved. Moreover, this hydrophilic porous thin film X can be easily mass-produced, so that it can be very inexpensively produced.

### BRIEF DESCRIPTION OF THE DRAWINGS

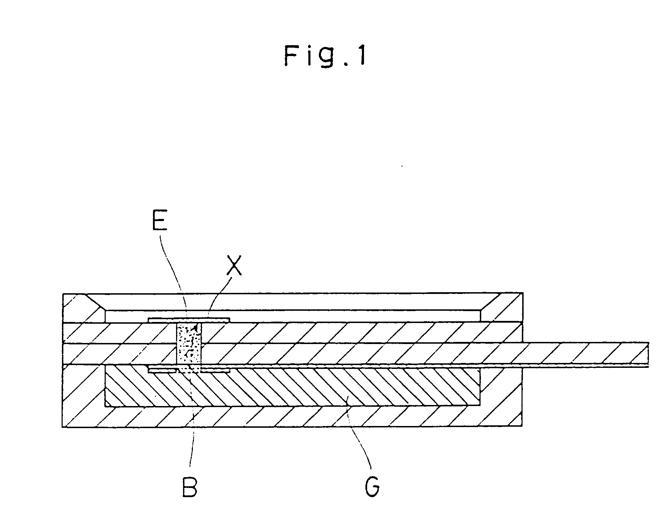

- **Fig. 1**: shows a rough longitudinal sectional view of a fundamental construction of a liquid junction structure in a reference electrode according to the present invention.
Preferred embodiments of the sheet type reference electrode according to the present invention are shown in Figs. 2 to 9.
- **Fig. 2**: shows a disintegrated perspective view of a pH-measuring sheet type composite electrode for reference purposes;
- **Fig. 3**: shows a developed longitudinal sectional view of principal parts of the electrode shown in Fig.2;
- **Fig. 4**: shows a disintegrated perspective view of a pH-measuring sheet type composite electrode according to the first preferred embodiment;
- **Fig. 5**: shows a developed longitudinal sectional view of principal parts of the pH-measuring sheet type composite electrode according to the first preferred embodiment;
- **Fig. 6**: shows a disintegrated perspective view of an ion-measuring sheet type composite electrode according to the second preferred embodiment;
- **Fig. 7**: shows a sectional view of Fig. 6 taken along the line VII-VII thereof;
- **Fig. 8**: shows a sectional view of Fig. 6 taken along the line VIII-VIII thereof;
- **Fig. 9**: shows a partially developed sectional view of a third preferred embodiment of the present invention;
- **Fig.10**: shows a rough longitudinal sectional view of a sheet type reference electrode (portion) having the conventional construction.

### DESCRIPTION OF THE PREFERRED EMBODIMENTS

The preferred embodiments of the present invention are below described with reference to the drawings.

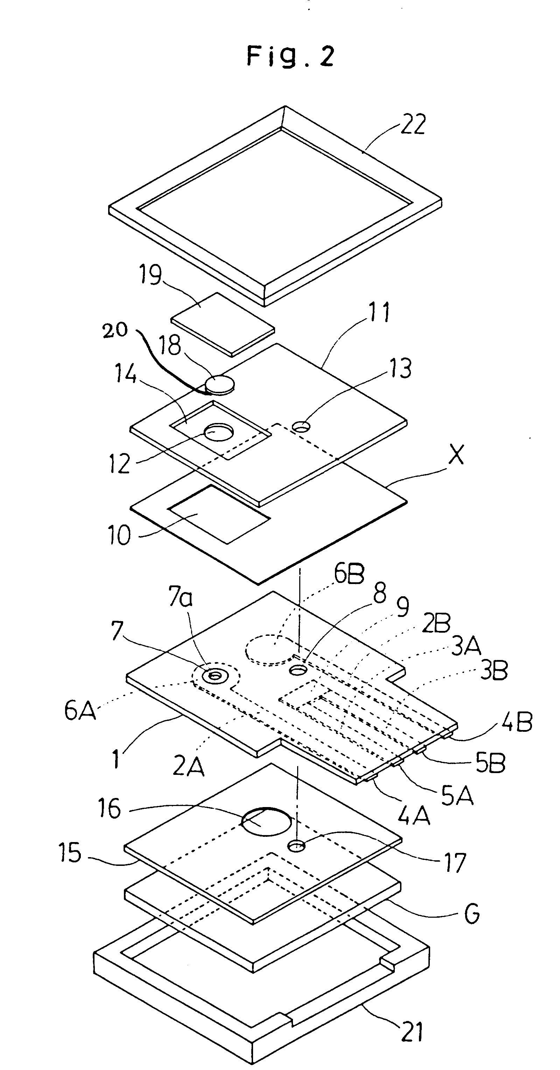

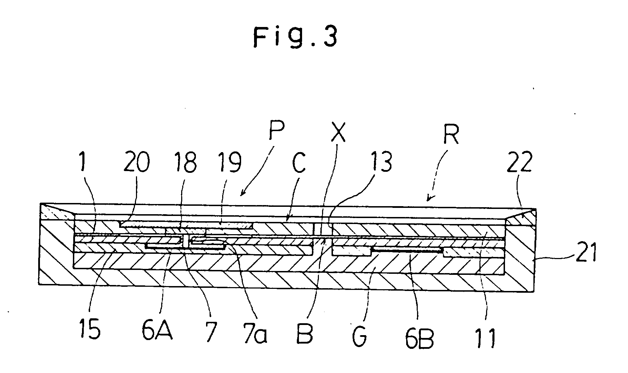

The disintegrated perspective view shown in Fig. 2 and the developed longitudinal sectional view of principal parts shown in Fig. 3 relate to an embodiment of a sheet type composite electrode for measuring the pH for reference purposes only.

In Figs. 2 and 3, reference number 1 designates a substrate formed of a material (for example organic high molecular materials, such as polyethylene, polypropylene, polyethylene terephthalate, acrylic resin and polyfluoroethylene, and inorganic materials, such as silica glass and pyrex glass) having a sufficiently high electrical insulating property even though it is immersed in a solution containing electrolytes (in the present embodiment a polyethylene terephthalate plate) and provided with two pairs of electrodes (an inside pair of electrodes and an outside pair of electrodes) 2A,2B,3A,3B sticking to the lower surface side thereof by depositing metals selected from the group consisting of electrically conductive Ag, Cu, Au, Pt and the like and alloys thereof or a paste comprising said metals or semiconductors, such as IrO₂ and SnO₂, by physical plating methods, such as the vacuum vapour deposition method and the CVD method, or chemical plating methods, such as the electrolytic method and the nonelectrolytic method, or printing methods, such as the silk printing screen method, the anastatic method and the flat plate method ( in the present embodiment the lower surface of said substrate 1 is subjected to the grafting process and the anchoring treatment by a silane coupling agent and the like and then an Ag paste is printed thereon by the silk printing screen method). In addition, a base end portion positioned at one end edge portion of the substrate 1 in these electrodes 2A,2B,3A,3B is formed as lead portions 4A,4B, 5A, 5B, respectively. Other nearly circular pointed end portions positioned at nearly in the central portion of the substrate 1 in the outer pair of electrodes 2A,2B are formed as internal electrode portions 6A, 6B coated with an electrode material, such as AgCl, (by means of physical plating methods, chemical plating methods, printing methods or the like in the same manner as the above described), one internal electrode portion 6A (corresponding to the pH-measuring electrode portion P) being provided with a through hole 7, of which the inside surface is subjected to an electrifying treatment so that an electrode-like through hole is formed at the central portion thereof, and the other internal electrode portion 6B (corresponding to the reference electrode portion R) being provided with a through hole 8 at the vicinity thereof. Reference number 7a designates the electrified portion of the through hole 7. A temperature-compensating electrode portion 9, such as a thermistor, is provided by extending over the other pointed end portions positioned at approximately the central portion of said substrate 1 of the inner pair of electrodes 3A,3B.

Reference mark X designates a hydrophilic porous thin film provided on the upper surface of said substrate 1 provided with a rectangular hole 10 formed at that place corresponding to said through hole 7 formed in the substrate 1 having the circumferential electrified portion 7a. In the present embodiment as said hydrophilic porous thin film X a hydrophilic polypropylene film (DURAGURD® No. 3400, thickness: 25µm, the largest hole diameter: 0.02 x 0.2 µm) is used. The hydrophilic porous thin film X having said through hole 8 is laminated on the upper surface of the substrate 1 by the hot melting method using an adhesive (for example, polyolefine adhesives, silicon resin adhesives and the like) which provide for securing sufficiently high electrical insulating properties (for example, 10 MΩ or more).

The material of said hydrophilic porous thin film X comprises materials selected from PVC, polycarbonate, polyester, ABS, polytetrafluoroethylene, polyurethane, cellulose, cellulose acetate, polyacrylonitril, polymethylmethacrylate, polyethylene vinyl acetate and polysulfone, in addition to the above described polyolefine polymers, such as polypropylene and polyethylene. Also hydrophobic materials can be used by subjecting them to a H₂O plasma treatment and a silane coupling treatment to impart the hydrophilic property.

In addition, said hydrophilic porous thin film X is not limited to a one-layer structure. For example, a multi-layer structure comprising a laminated plurality of hydrophilic porous thin films having the same one pore-diameter or different pore-diameters may be used. Thus, the quantity of ions diffused can be more easily and accurately controlled.

Reference number 11 designates a first support layer formed of a material having a sufficiently high electrical insulating property in the same manner as said substrate 1 (in the present embodiment it is polyethylene terephthalate), provided with through holes 12, 13 formed at places corresponding to the through holes 7, 8 formed in said substrate 1 and a rectangular portion 14 formed in the circumference of the upper side of said through hole 12, said first support layer is provided on the upper surface of said hydrophilic porous thin film X by for example the screen printing method or the hot melting method using an adhesive (for example, polyolefine adhesives, silicon resin adhesives and the like) which provide for securing a sufficiently high electrical insulating property (for example, 10 MΩ or more) or the like. The upper surface of this first support layer 11 is also subjected to the grafting process and the anchoring treatment by a silane coupling agent and the like.

Besides, said hydrophilic porous thin film X may be pre-laminated on the lower surface of this first support layer.

Reference number 15 designates a second support layer formed of a material having a sufficiently high electrical insulating property in the same manner as the substrate 1 and the first support layer 11 (in the present embodiment it is polyethylene terephthalate), provided with through holes 16, 17 formed at that places corresponding to the internal electrode portion 6B of the reference electrode R and the through hole 8 formed in said substrate 1. The second support layer is provided on the lower surface of said substrate 1 in the same manner as said first support layer 11.

Reference number 18 designates a gelatinized internal solution to be filled in the through hole 12 of said first support layer 11 to come into contact with the pH-measuring electrode portion P. Said gelatinized internal solution 18 is obtained by adding a gelatinizer (for example, agar-agar, gelatine, glue, alginic acid, various kinds of water-absorbing polymers and the like) and a water-evaporation inhibitor (for example, glycerine, ethylene glycol and the like) to a basic internal solution obtained by adding a phosphoric acid buffer solution to a 3.3 M aqueous solution of KCl supersaturated with AgCl and molding the resulting mixture into a disc-like shape. This gelatinized internal solution 18 is filled into the through hole 12 by heating to convert it into a paste and printed by the screen printing method and the like so that its upper surface may slightly project over the upper surface of said first support layer 11. This gelatinized internal solution 18 is tightly sealed up in the through hole 12 and connected with the internal electrode portion 6A by the electrified portion 7a of the through hole 7 by sticking to the lower surface of a flat plate-like pH-response membrane 19 formed to have a predetermined size to the upper surface of the gelatinized internal solution 18. In addition, reference number 20 designates an adhesive having a sufficiently high electrical insulating property (for example, organic high molecular adhesives, such as silicone adhesives, epoxy adhesives and urethane adhesives) which provides sufficiently high electrical insulating properties for fixedly mounting said gelatinized internal solution 18 in the rectangular portion 14 of said first support layer along the circumference thereof.

Reference mark G designates a relatively large rectangular shaped gelatinized internal solution for the use in the reference electrode portion to be filled into a bottom case 21 having the same composition as the gelatinized internal solution 18 of said pH-measuring electrode portion P and brought into contact with not only the internal electrode portion 6B through the through hole 16 of said second support layer but also with the lower surface of said hydrophilic porous thin film X through the through hole 17 of the second support layer (so that each portion may be risen). In addition, this surface portion, where the gelatinized internal solution G is brought into contact with the hydrophilic porous thin film X is herein called the liquid junction surface B.

Reference number 22 designates a frame member fixedly mounted on the upper surface of the circumference of said first support layer 12 and provided with a sample solution-dropping portion C formed on the internal side thereof.

In the pH-measuring sheet type composite electrode having the above described construction, the liquid junction surface B of the gelatinized internal solution G at the position of the reference electrode portion R is covered with the hydrophilic porous thin film X, so that it is not in direct contact with the sample solution added into the sample solution-dropping portion C. Accordingly, the diffusion of ions from the gelatinized internal solution G can be surely controlled by the thin film X to maintain the quantity of ions diffusing at a constant value for a long time. As a result, a long life time of the electrode and an accurate measurement can be remarkably improved.

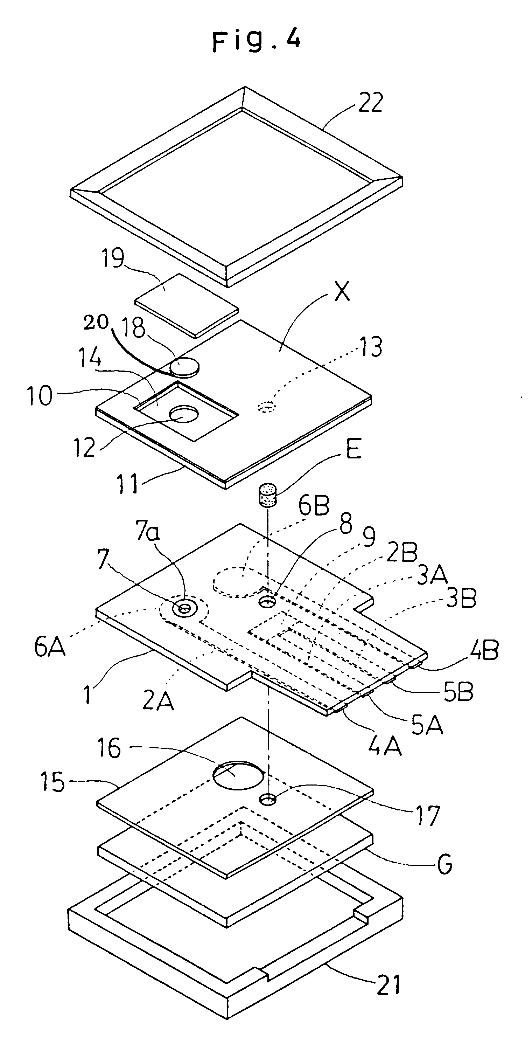

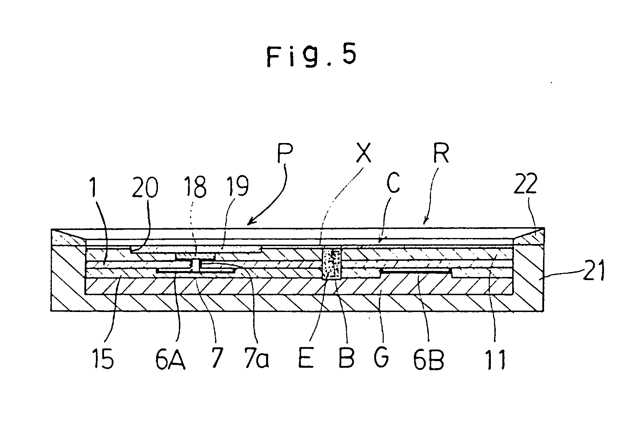

The disintegrated perspective view of Fig. 4 and the developed longitudinal sectional view of Fig. 5 showing principal parts of Fig. 4 show a pH-measuring sheet type composite electrode according to a first preferred embodiment. In this case, a hydrophilic porous thin film X is laminated on the upper surface of the first support layer 11, a liquid junction member E formed of a columnar gel-impregnated hydrophilic high molecular porous material is provided so as to extend over the through hole 8 of the first support layer 1, the through hole 8 of the substrate 1 and the through hole 17 of the second support layer 15 in an inserted manner, the liquid junction surface B, which is the upper surface of the liquid junction member E, is brought into contact with the lower surface of said hydrophilic porous thin film X, and the lower surface of the liquid junction member E is brought into contact with the gelatinized internal solution G at the position of the reference electrode R. This liquid junction member E has been disclosed in detail in the Japanese Utility Model Application No. Sho. 61-191498 filed by the present applicant. The liquid junction member E is obtained by impregnating a sintered molded product of olefinic high polymer powders having the nearly same mechanical strength as for example polyolefine and a hydrophilicity due to a transformation treatment (for example SUNFINE AQ® - manufactured by Asahi Kasei Kogyo Co., Ltd.) as a hydrophilic high molecular porous material formed by sintering and molding chemically stabilized hydrophilic high molecular powders with a gelatinized composition, which does not dry out when it is left unattended in the air, such as a water-containing jelly mainly comprising sodium salt of an acrylic polymer, (for example, U-jelly® - manufactured by Showa Denko Co., Ltd.).

In this first preferred embodiment, since the liquid junction member E for preventing the dry-out phenomenon is put between the hydrophilic porous thin film X and the gelatinized internal solution, a long life time of the gelatinized internal solution G can be maintained for a longer time.

Other constructions, operations and the like are similar to that of the embodiment shown in Fig. 2 and 3; members having the same function are marked with the same reference numbers and marks whereby their description has been omitted.

In the first preferred embodiment, the liquid junction structure in the sheet type reference electrode exhibits superior effects in that the quantity of ions diffusing from the gelatinized internal solution can be very satisfactorily controlled, whereby obtaining a remarkable improvement in view of the life time of electrode and accuracy of the measurement eventhough a remarkably simple and superior in mass-productivity means is used in that a liquid junction surface of the gelatinized internal solution or a liquid junction member connected to the gelatinized internal solution for a sample solution is covered with a hydrophilic porous thin film.

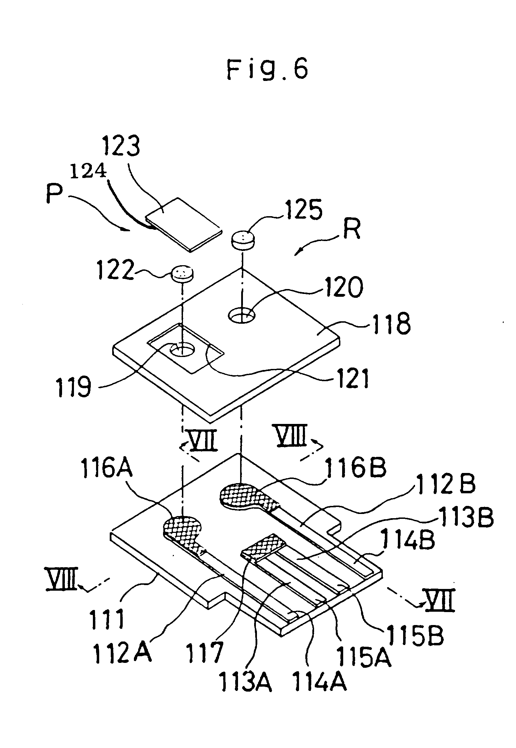

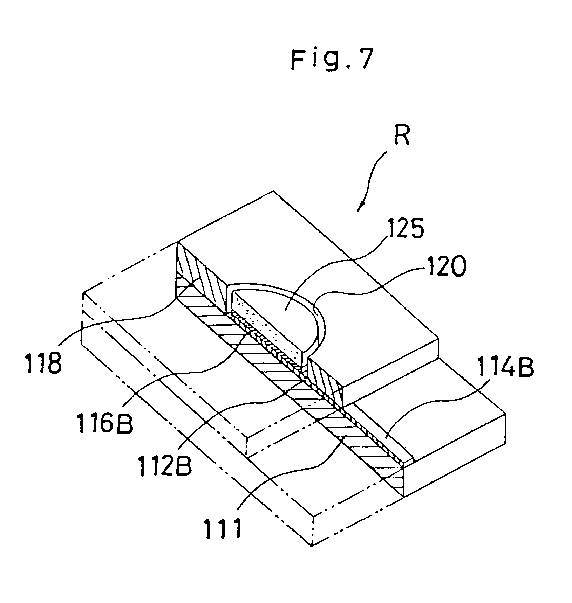

Other preferred embodiments of the present invention are below described with reference to Figs. 6 to 9.

Figs. 6 to 8 show a sheet type composite electrode for measuring the pH.

In Figs. 6 to 8, reference mark 111 designates a substrate formed of a material (in the present preferred embodiment it is a polyethylene terephthalate plate) having a sufficiently high electrical insulating property even when it is immersed in a solution comprising electrolytes, such as organic high molecular materials, for example polyethylene, polypropylene, polyethylene terephthalate, acryl, polyfluoroethylene and the like, and an inorganic material, for example silica glass, pyrex glass and the like which is provided with two pairs of electrodes 112A, 112B, 113A, 113B (inside pair of electrodes and outside pair of electrodes) formed by sticking a metal selected from the group consisting of electrically conductive Ag, Cu, Au, Pt and the like, alloys thereof and the like, or a paste including said metal, or a semiconductor, such as IrO₂ and SnO₂, to the upper surface of the substrate 111 by a physical plating method, such as vacuum deposition method and CVD method, or a chemical plating method, such as electrolytic method and non-electrolytic method, or a printing method, such as silk printing screen method, anastatic printing and flat plate printing (in the present preferred embodiment the upper surface of said substrate 111 is subjected to the graft processing and the anchoring process by a silane coupling agent and the like and then, an Ag paste is printed on the upper surface of said substrate 111 by the silk screen printing method). In addition, a base end portion of each electrode 112A, 112B, 113A, 113B positioned at one end edge portion of the substrate 111 is formed as the lead portions 114A, 114B, 115A, 115B. The other nearly circular pointed end portions positioned at the nearly central portion in the outside pair of electrodes 112A, 112B of said substrate 111 are formed as the internal electrode portions 116A and 116B coated with an electrode material, such as AgCl, (by physical plating methods or chemical plating methods or printing methods in the same manner as above described) and a temperature-compensating electrode portion 117 is provided extending over the other pointed end portions positioned at the nearly central portion of said substrate 111 between the inside pair of electrodes 113A, 113B. For example, a thermistor and the like are used as said temperature-compensating electrode portion 117.

Reference number 118 designates a support layer provided on the upper surface of the substrate 111 formed of a material having a sufficiently high electrical insulating property in the same manner as the substrate 111 (in the present preferred embodiment it is a polyethylene terephthalate layer) and with a rectangular portion 121 formed on the upper surface side thereof. Said portion 121 includes a through hole 119. Through holes 119, 120 are provided at places corresponding to the internal electrode portions 116A, 116B, respectively, formed in the substrate 111.

This support layer 118 is obtained by for example the screen printing method or the heat fusion treatment using an adhesive (for example, polyolefine adhesives, silicon resin adhesives and the like) which are capable of securing a sufficiently high electrical insulating property (for example, 10 MΩ or more). Also the upper surface of the support layer 118 is subjected to the grafting process and the anchoring process by a silane coupling agent and the like.

Reference numeral 122 designates a gelatinized internal solution filled in the through hole 119 of the support layer 118 formed in for example a disc-like shape by adding a gelatinizer (for example, agar-agar, gelatine, glue, alginic acid, various kinds of acrylic water-absorbing polymer and the like) and a gel-evaporation inhibitor (for example, glycerine, ethylene glycol and the like) to a basic internal solution obtained by for example adding a phosphoric acid buffer solution to a 3.3 M aqueous solution of KCI supersaturated with AgCl.

The gelatinized internal solution 122 is filled into the through hole 119 by heating it under conversion into a paste and printing the resulting paste by the screen printing method so that the upper surface thereof may slightly project over the upper surface of the support layer 118 under free conditions and may be sealed up tightly in the through hole 119 by providing a flat plate-like selective ion-response membrane 123, which is formed so as to have the size of the rectangular portion 121, so that the lower surface of the flat plate-like selective ion-response membrane 123 may be contacted to the upper surface thereof, and brought into contact with the internal electrode portion 116A by obtaining the pH-measuring electrode P.

Reference numeral 124 designates an adhesive, for example high molecular adhesives such as a silane coupling agent having a sufficiently high electrical insulating property for sticking the selective ion-response membrane 123 to the support layer 118 along the circumference thereof.

Reference numeral 125 designates a gel-impregnated hydrophilic high molecular porous material which is to be inserted into another hole 120 provided in the support layer 118. Said gel-impregnated hydrophilic high molecular porous material 125 functions as a combination of the liquid junction and internal solution portion of the reference electrode R.

The gel-impregnated hydrophilic high molecular porous material 125 is formed by impregnating a hydrophilic high molecular porous material, which is obtained by sintering and molding chemically stabilized hydrophilic high molecular particles, for example sintered and molded olefinic high polymeric powders having a mechanical strength nearly equal to that of polyolefines, to which the hydrophilicity is imparted by a modification treatment (for example, SUNFINE AQ®, manufactured by Asahi Kasei Kogyo Co., Ltd.) with a gelatinized composition which does not deposite KCl. Moreover, the wetness from the surface of the porous material is maintained by said impregnation, that it does not dry out, even when it is left unattended in the air.

The above described gelatinized composition is obtained by dissolving a high moisture-preserving water-containing jelly mainly comprising acrylic polymers (for example, U-jelly®, manufactured by Showa Denko Co., Ltd.) in the internal solution obtained by for example adding a phosphoric acid buffer solution to a 3.3 M aqueous solution of KCl supersaturated with AgCl and then adding a gelatinizer selected from the group consisting of agar-agar, gelatine, glue, alginic acid and the like to the resulting solution.

Said U-jelly as the high humidity preserving water-containing jelly was originally developed by Showa Denko Co., Ltd. as a base agent for a cosmetic cream. This transparent water-containing jelly mainly comprises the sodium salt of an acrylic polymer having a remarkably high compatibility with other aqueous solutions and a remarkably superiority to conventional moisture-evaporation inhibitors, such as glycerine and propylene glycol, a moisture-preserving function and vapour pressure equilibrium-preserving function due to the formation of cluthrate by hydrogen bonds between polymeric molecules. Accordingly, this jelly can maintain a sufficient lubricity for a long time without drying out even when it is exposed to air for a long time so that the adsorption of water in the air and dewing do hardly occur and as a result, its surface can be always maintained under a moderate wet conditions according to the invention.

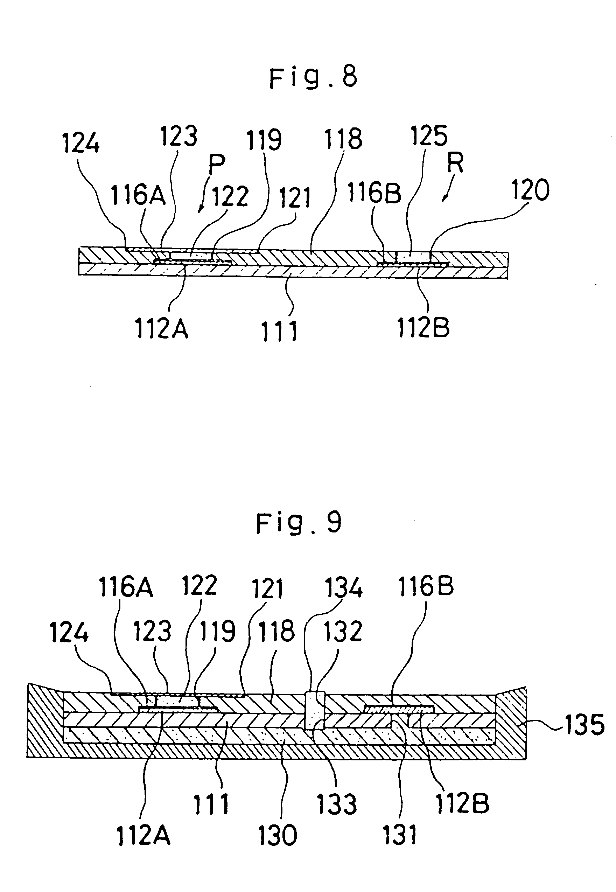

Although the combination of the liquid junction and the internal solution portion of a side of the reference electrode R is formed of the gel-impregnated hydrophilic high molecular porous material 125, it may be formed in such a manner as shown in Fig. 9.

In Fig. 9, reference number 130 designates a gelatinized internal solution having the same composition as the gelatinized internal solution 122 described in the above described preferred embodiment which is provided on the lower surface of the substrate 111. And, substrate 111 is provided with a through hole 131 formed at a place corresponding to the internal electrode portion 116B (of a side of the reference electrode R) and the gelatinized internal solution 130 is brought into contact with the intemal electrode portion 116B by the through hole 131.

In addition, substrate 111 and the support layer 118 are provided with through holes 132, 133 at corresponding positions so as to communicate with each other and a gel-impregnated hydrophilic high molecular porous material 134 formed in the same manner as the above described gel-impregnated hydrophilic high molecular porous materials 125 is inserted into said through holes 132, 133 so that the lower end thereof may be brought into contact with the gelatinized internal solution 130. In addition, reference number 135 designates a bottom case.

In the above described construction, the gel-impregnated hydrophilic high molecular porous material 134 as the liquid junction portion is connected to the lead portion 112B by the gelatinized internal solution 130.

According to a reference electrode of the above second and third embodiments, when a gel-impregnated hydrophilic high molecular porous material obtained by impregnating a chemically stabilized hydrophilic high molecular porous material with a gelatinized composition which does not dry out even when it is left in the air is used as liquid junction portion, the reference electrode has advantages in that it can be surely preserved and a stabilized measurement can be obtained.

## Claims

1. A sheet type reference electrode (R) for a sheet type composite electrode, comprising a gelatinized internal solution (G, 122, 130) formed by adding a gelatinizing agent and a water-evaporation inhibitor to an internal solution enclosed in a support frame member (22, 135), an internal electrode (6B, 116B) coated with an electrode material in contact with said internal solution, and a liquid junction member (E, 125, 134) consisting of a gel-impregnated hydrophilic porous material obtained by impregnating a chemically stabilized hydrophilic high molecular porous material with a gelatinized composition which does not dry out even when it is left in the air, wherein said liquid junction member either
a) is provided to be in contact with the internal electrode (116B) on the lower side thereof and exposed on the measuring surface at the upper side thereof
or
b) connects said gelatinized internal solution (130) with the sample solution.

2. The reference electrode according to claim 1, further comprising a hydrophilic porous film (X) covering said liquid junction member (E) which connects said gelatinized internal solution (G) with the sample solution.

3. The reference electrode according to claim 2, wherein said hydrophilic porous film (X) has a multilayer structure comprising a plurality of piled-up films having pores of the same diameter or of different diameters.

## Patentansprüche

1. Referenzelektrode (R) vom Blatt-Typ für eine zusammengesetzte Elektrode vom Blatt-Typ, umfassend eine gelatinierte Innenlösung (G, 122, 130), die durch Zugabe eines Gelatinierungsmittels und eines Wasserverdampfungsinhibitors zu einer in einem Trägerrahmenelement (22, 135) eingeschlossenen Innenlösung gebildet worden ist, eine Innenelektrode (6B, 116B), die mit einem Elektrodenmaterial beschichtet ist, in Kontakt mit der Innenlösung, und ein Flüssig-Verbindungselement (E, 125, 134), bestehend aus einem Gel-imprägnierten hydrophilen porösen Material, das durch Imprägnieren eines chemisch stabilen, hydrophilen, hochmolekularen porösen Materials mit einer gelatinierten Zusammensetzung, welche nicht austrocknet, selbst wenn sie an Luft stehen gelassen wird, erhalten worden ist, wobei das Flüssig-Verbindungselement entweder
a) so vorgesehen ist, daß es in Kontakt mit der Innenelektrode (116B) auf deren Unterseite steht und auf der Meßoberfläche an deren Oberseite freiliegt,
oder
b) die gelatinierte Innenlösung (130) mit der Probenlösung verbindet.

2. Referenzelektrode nach Anspruch 1, umfassend weiterhin eine hydrophile poröse Folie (X), welche das Flüssig-Verbindungselement (E), welches die gelatinierte Innelösung (G) mit der Probenlösung verbindet, bedeckt.

3. Referenzelektrode nach Anspruch 2, wobei die hydrophile poröse Folie (X) eine Mehrschichtstruktur aufweist, umfassend eine Vielzahl von aufeinandergeschichteten Folien mit Poren des gleichen Durchmessers oder mit verschiedenen Durchmessern.

## Revendications

1. Electrode de référence (R) de type en feuille pour une électrode composite de type en feuille, comprenant une solution interne gélatinisée (G,122,130) formée en ajoutant un agent gélatinisant et un inhibiteur d'évaporation d'eau à une solution interne, incluse dans un élément de support en forme de cadre (22,135), une électrode interne (6B,116B) recouverte d'un matériau d'électrode en contact avec ladite solution interne, et un élément de jonction liquide (E,125,134) constitué d'un matériau poreux hydrophile imprégné de gel, obtenu en imprégnant un matériau poreux de haut poids moléculaire hydrophile stabilisé chimiquement avec une composition gélatinisée qui ne s'assèche pas même lorsqu'elle est abandonnée à l'air, dans laquelle ledit élément de jonction liquide
a) soit est disposé pour être en contact avec l'électrode interne (116B) sur la face inférieure de cette dernière et exposé sur la face supérieure de la surface de mesure,
b) soit connecte ladite solution interne gélatinisée (130) avec l'échantillon de solution.

2. Electrode de référence selon la revendication 1, comprenant en outre une pellicule poreuse hydrophile (X) recouvrant ledit élément de jonction liquide (E) qui connecte ladite solution interne gélatinisée (G) avec l'échantillon de solution.

3. Electrode de référence selon la revendication 2, dans laquelle ladite pellicule poreuse hydrophile (X) a une structure multicouche comprenant plusieurs couches empilées ayant des pores de même diamètre ou de diamètres différents.
